# EUROPÄISCHE PATENTANMELDUNG

(11) **EP 1 112 895 A2**
(43) Veröffentlichungstag der Anmeldung: **04.07.2001**
(21) Anmeldenummer: 00127829.0
(22) Anmeldetag: 19.12.2000
(51) Int. Cl.: B60R 11/02

(54) **Verbindung von Telefon und Halterung**

(30) Priorität: 28.12.1999 DE 19963379
(71) Anmelder: NOKIA MOBILE PHONES LTD., 02150 Espoo (FI)
(72) Erfinder: Gester, Ralf, 40211 Düsseldorf (DE); Thrien, Markus, 45899 Gelsenkirchen (DE)
(74) Vertreter: Steinmeister, Helmut, Dipl.-Ing.

(57) **Zusammenfassung**

Die Erfindung befaßt sich mit der Ausbildung einer aus einem Telefon 10 und einer Halterung 14 bestehenden Kombination, insbesondere mit der Art und Weise der gegenseitigen Verbindung von Telefon 10 und Halterung.

Dazu wird angegeben, daß eine Zunge 13 mit der einer Breite B2 und ein zur Zunge 13 komplementärer Schlitz 15 vorhanden ist, wobei die Breite B2 der Zunge 13 geringer ist als die Breite B1 des Telefons 10, und daß zur ausschließlichen Befestigung des Telefons 10 in der Halterung 14 die Zunge 13 in den Schlitz 15 eingreift. Hierdurch werden sonst übliche und zur Befestigung des Telefons 10 erforderliche und über den Lichtenquerschnitt des Telefons 10 hinausgehende Vergrößerungen vermieden. Außerdem hat die Erfindung den Vorteil, daß durch die erfindungsgemäße Verbindung von Telefon 10 und Halterung 14 zumindest die Kontakte 16 des Telefons 10 ohne großen Aufwand verdeckt angeordnet werden können.

## Beschreibung

### Technisches Gebiet

Die Erfindung befaßt sich mit der Ausbildung einer aus einem Telefon und einer Halterung bestehenden Kombination, insbesondere mit der Art und Weise der gegenseitigen Verbindung von Telefon und Halterung.

### Stand der Technik

Gemäß dem Stand der Technik ist es bekannt, daß Mobiltelefone oder auch schnurlose Telefone zur Aufbewahrung oder zum Laden des Akkusatzes mit einer Halterung verbunden werden. Zur Erfüllung dieses Zwecks sind bekannte Halterungen in aller Regel mit einer Vertiefung versehen, welche das jeweilige Telefon zur Aufbewahrung oder zum Laden aufnimmt. Wird das jeweilige Telefon beispielsweise als Autotelefon betrieben, sind zusätzliche Sicherungsmaßnahmen erforderlich, damit verhindert wird, daß ein in die Halterung eingelegtes Autotelefon bei einem Unfall nicht aus der Halterung geschleudert wird und Verletzungen von Insassen hervorrufen kann. Bekannte Sicherungsmaßnahmen sind beispielweise Schnapphakenverbindungen, die hinter entsprechenden Vorsprüngen verrasten, wenn das Telefon mit der Halterung verbunden ist. Da es sich bei Autotelefonen oftmals um handelsübliche Mobiltelefone handelt und somit trotz der Verwendungsmöglichkeit im Fahrzeug keine Besonderheit aufweisen, sind die Sicherung, die das Mobiltelefon in oder an der Halterung fixieren, ausschließlich an oder innerhalb der Halterung ausgebildet. Stellvertretend hierfür sei nur auf DE-A-199 34 099 hingewiesen.

Wie leicht einzusehen ist, führt die Integration der entsprechenden Sicherungen an oder innerhalb der Halterungen mit einem vermehrten und über die lichten Maße der Mobiltelefone hinausgehenden Platzbedarf bei den Halterungen, was bei der Automobilindustrie -als den Abnehmern solcher Halterungen- zunehmend zu Problemen führt.

Daher liegt der Erfindung die Aufgabe zugrunde eine Halterung für Telefone anzugeben, die eine "crash-sichere" Verbindung zwischen Halterung und Telefon gewährleistet und dabei nicht einen über die lichten Abmessungen des jeweiligen Telefons hinausgehen Platzbedarf erfordert.

### Darstellung der Erfindung

Diese Aufgabe wird mit den in Anspruch 1 angegebenen Merkmalen gelöst. Vorteilhafte Aus- und Weiterbildungen der Erfindung sind in den Ansprüchen 2 bis 8 enthalten.

Ist gemäß Anspruch 1. Insbesondere dadurch, daß die Breite B2 der Zunge und des zur Zunge komplementären Schlitzes geringer ist als die Breite des Telefons, wird es möglich die Befestigung des Telefons ausschließlich an dessen Rückseite zu realisieren. Ob dabei die Zunge am Telefon und der Schlitz am Halter ausgebildete ist oder ob das Telefon mit dem den Schlitz und der Halter mit der Zunge versehen ist, ist für die Befestigungsfunktion nebensächlich, wenngleich jede der beiden Ausbildungen eigene Vorteile aufweist. Ist das Telefon mit der Zunge versehen, kann der Halter ohne vorstehende Teile ausgebildet werden. Vielmehr reicht es in diesem Fall aus, wenn beispielsweise am Befestigungsort für das Telefon lediglich ein Schlitz in einer Wandung bereitgestellt wird, in den zur Befestigung des Telefons dessen Zunge eingreift. Außerdem kann die am Telefon ausgebildete Zunge als Clip genutzt werden, um beispielsweise das Telefon an der Kleidung zu befestigen.

Eine "crash-sichere" Befestigung des Telefons ist dann gegeben, wenn gemäß Anspruch 2 an der Zunge und/oder am Schlitz eine Arretieranordnung vorgesehen ist, die einen Schutz gegen unbeabsichtigtes Trennen von Zunge und Schlitz bildet, wenn die Zunge in den Schlitz eingeschoben ist, und wenn ein Entriegelungsmechanismus vorhanden ist, der auf die Arretieranordnung wirkt und der im betätigten Zustand eine Trennung von Schlitz und Zunge erlaubt.

Ist gemäß Anspruch 3 der Entrieglungsmechanismus Teil des Telefons, kann dieses besonders einfach von der Halterung getrennt werden.

Sind gemäß Anspruch 4 an der Zunge und im Schlitz jeweils elektrisch leitende Kontakte vorgesehen, die im verbundenen Zustand von Zunge und Schlitz miteinander in körperlichem Kontakt stehen, lassen sich ohne besonderen Aufwand frei zugängliche Kontakte zumindest am Telefon vermeiden. Hierdurch wird insbesondere ausgeschlossen, daß es zu einer unbeabsichtigten Fehlkontaktierung durch einen leitenden Gegenstand (Münzen oder Schlüssel) kommt, wenn beispielsweise das Mobiltelefon in der Hosentasche mitgeführt wird.

Weist die Zunge gemäß Anspruch 5 im wesentlichen zwei Längsseiten und vier Schmalseiten auf und sind die an der Zunge ausgebildeten Kontakte lediglich an einer der beiden Längsseiten angeordnet, schützt zumindest die andere Längsseite der Zunge die an der Zunge angebrachten Kontakte vor Berührungen und/oder Fehlkontaktierungen.

Ein völliger Schutz vor Berührungen und/oder Fehlkontaktierungen der Kontakte ist gemäß Anspruch 6 dann gegeben, wenn die Kontakte an der Zunge und/oder im Schlitz mit einem beweglichen Schutz versehen sind, der die jeweils geschützten Kontakte erst dann freigibt, wenn die Zunge in den Schlitz eingeführt wird.

Ist gemäß Anspruch 7 das Telefon mit dem Schlitz und die Halterung mit der Zunge versehen, sind keine besonderen Modifikationen des Telefons notwendig.

Insbesondere wird durch die in Anspruch 7 angegebene Ausbildung die Kontaktierung bzw. der dafür erforderliche Aufwand erheblich reduziert. Ist nämlich gemäß Anspruch 8 innerhalb des Telefons eine Hauptleiterplatte vorgesehen und können auf der Hauptleiterplatte in sehr einfacher Weise die Kontakte ausgebildet werden, die bei in den Schlitz eingeschobener Zunge mit den Kontakten der Zunge in körperlichen Kontakt kommen.

### Kurze Darstellung der Figuren

Es zeigen:
- Fig. 1: ein Telefon und eine Halterung in Seitenansicht (schematisch);
- Fig. 2: eine Rückansicht eines Telefons gemäß Fig. 1:
- Fig. 3: eine weitere Darstellung eines Telefons und einer Halterung in Seitenansicht (schematisch);
- Fig. 4: eine weitere Darstellung eines Telefons und einer Halterung in Seitenansicht (schematisch);
- Fig. 5: eine weitere Ausführungsform eines Telefons und einer Halterung gemäß Fig. 4;
- Fig. 6: eine Perspektive eines Telefons und einer Halterung
- Fig. 7: eine Explosionszeichung eines Telefons gemäß Fig. 6;
- Fig. 8: einen Entriegelungsmechanismus mit Halterung; und
- Fig. 9: eine weitere Darstellung gemäß Fig. 8.

### Wege zu Ausführen der Erfindung

Die Erfindung soll nun anhand der Figuren näher erläutert werden.

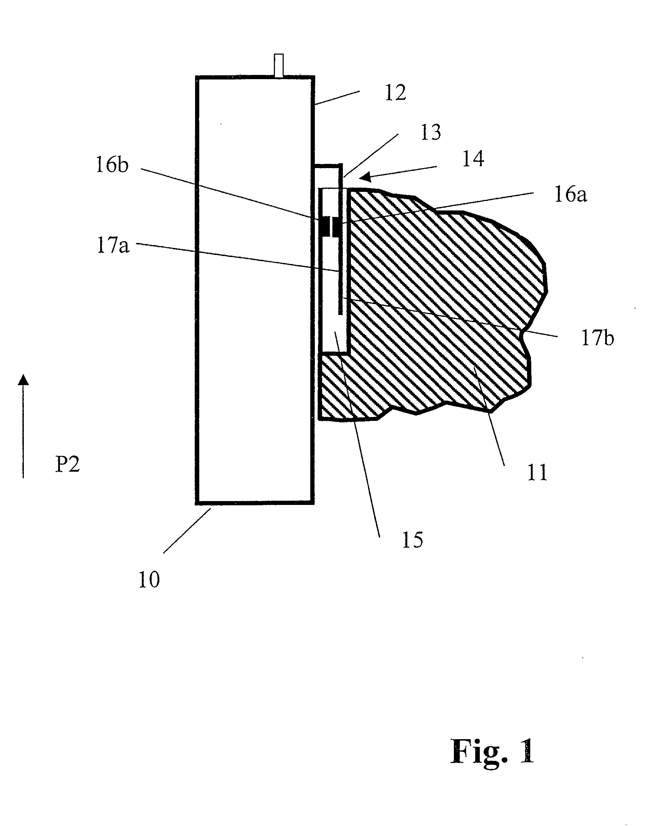

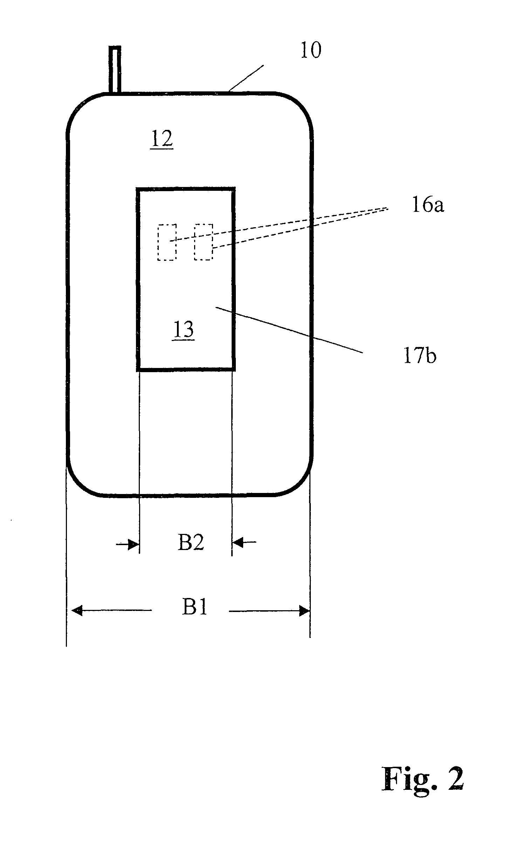

In Fig. 1 ist ein Telefon 10 in der Form eines Mobiltelefons gezeigt, welches mit einer Gehäusewandung 11 lösbar verbunden ist. Zu diesem Zweck ist die Rückseite 12 des Telefons 10 mit einer Zunge 13 versehen. Die Halterung 14 wird vorliegend im wesentlichen von einem in der Gehäusewandung 11 bereitgestellten und zu der Zunge 13 komplementären Schlitz 15 gebildet. Außerdem sind an der Zunge 13 und innerhalb des Schlitzes 15 elektrisch leitende Kontakte 16a und 16b vorgesehen, die miteinander in körperlichem Kontakt stehen, wenn die Zunge 13 ihre Endlage im Schlitz 15 eingenommen hat. Daß in Fig. 1 die Kontakte 16a und 16b keinen körperlichen Kontakt zueinander haben, obwohl die Zunge 13 ihre Endlage im Schlitz 15 eingenommen hat, dient allein zur besseren Darstellung der Verhältnisse. Auch ist Fig. 1 entnehmbar das die Kontakte 16a an der lediglich an der Längsseite 17a der Zunge 13 ausgebildet sind, die der Rückseite 12 des Telefons 10 zugewandt ist. Hierdurch wird ein Berührungsschutz realisiert, da die Kontakte 16a durch die andere Längsseite 17b verdeckt sind, wenn das Telefon der Halterung 14 entnommen ist (siehe auch Fig. 2).

Schon an dieser Stelle sei darauf hingewiesen, daß in sämtlichen hier besprochenen Ausführungsführungsformen die Kontakte 16a und 16b dann überflüssig sind, wenn das Telefon 10 keine leitfähige Verbindung zu anderen -beispielweise in der Gehäusewandung 11 integierten- Baugruppen benötigt.

Soll das Telefon 10 von der Gehäusewandung 11 getrennt werden, muß dieses ausgehend von der in Fig. 1 gezeigten Lage lediglich in Pfeilrichtung P1 so weit nach oben bewegt werden, bis die Zunge 13 vollständig aus dem Schlitz 15 herausgezogen ist. Ist dieser Zustand erreicht, kann die Zunge 13 zusammen mit der Rückseite 12 des Telefons 10 dazu genutzt werden, um das Telefon 10 beispielsweise an der Kleidung des Benutzers zu befestigen. Außerdem ist offensichtlich, daß wenn das Telefon 10 von der Gehäusewandung 11 getrennt ist, keine vorspringenden Kanten und Ecken gegeben sind. Dies ist insbesondere dann von Vorteil, wenn es sich bei der Gehäusewandung 11 beispielsweise um das Armaturenbrett eines Fahrfahrzeugs handelt.

In Fig. 2 ist die Rückansicht des Telefons 10 gemäß Fig. 1 gezeigt. Deutlich ist dieser Darstellung entnehmbar, daß die Breite B2 der Zunge 13 geringer ist als die Breite B1 des Telefons 10. Diese Ausbildung hat zur Folge, daß von der Zunge 13 und dem Schlitz 15 nichts sichtbar ist, wenn das Telefon 10 so wie in Fig. 1 gezeigt mit der Gehäusewandung 11 bzw. dem oder angebrachten Schlitz 15 verbunden ist.

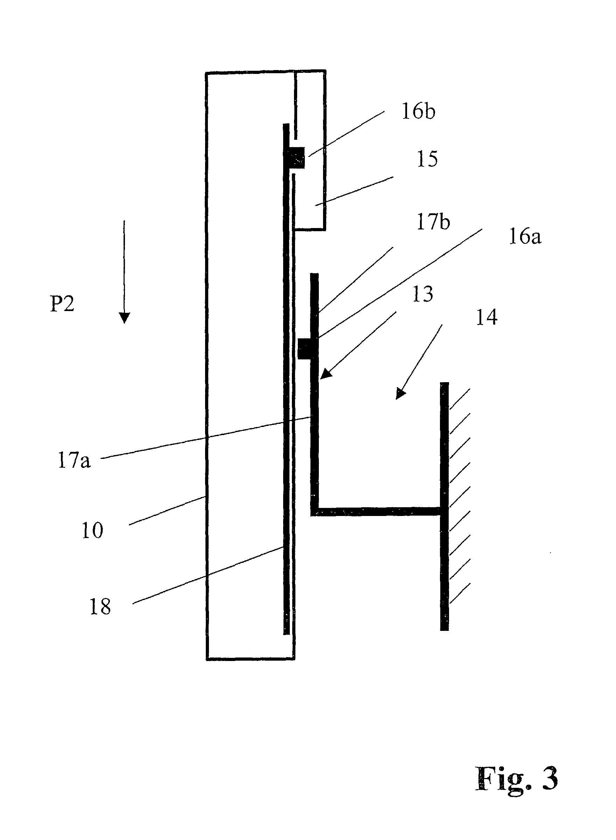

Auch in Fig. 3 sind ein Telefon 10 und eine Halterung 14 in Seitenansicht gezeigt, wobei das Telefon 10 allerdings noch nicht mit der Halterung 14 verbunden ist. Im Unterschied zu den bisher besprochenen Ausführungen ist in Fig. 3 das Telefon 10 mit dem Schlitz 15 versehen, während an Halterung 14 die Zunge 13 ausgebildet ist. Wird nun das Telefon 10 in Pfeilrichtung P2 nach unten bewegt, dringt die Zunge 13 in den Schlitz 15 ein. Hat die Zunge 13 ihre Endlage im Schlitz 15 eingenommen, stehen die elektrisch leitenden Kontakte 16a und 16b miteinander in körperlichem Kontakt. Auch wenn in Fig. 3 das Telefon 10 nur schematisch gezeigt ist, so ist doch dieser Darstellung entnehmbar, daß das Telefon 10 mit einer Hauptleiterplatte 18 versehen ist, die eine Mehrzahl der für das Telefon 10 erforderlichen Komponenten (nicht dargestellt) trägt. Auch ist sichtbar, daß die Kontakte 16a des Telefons 10 direkt auf der Hauptleiterplatte 18 angeordnet sind. Diese Ausbildung hat zur Folge, daß die Kontakte 16a am Telefon 10 besonders einfach und kostengünstig ausgebildet werden können, wenn eine leitfähige Verbindung zwischen dem Telefon 10 und der Halterung 14 erforderlich ist.

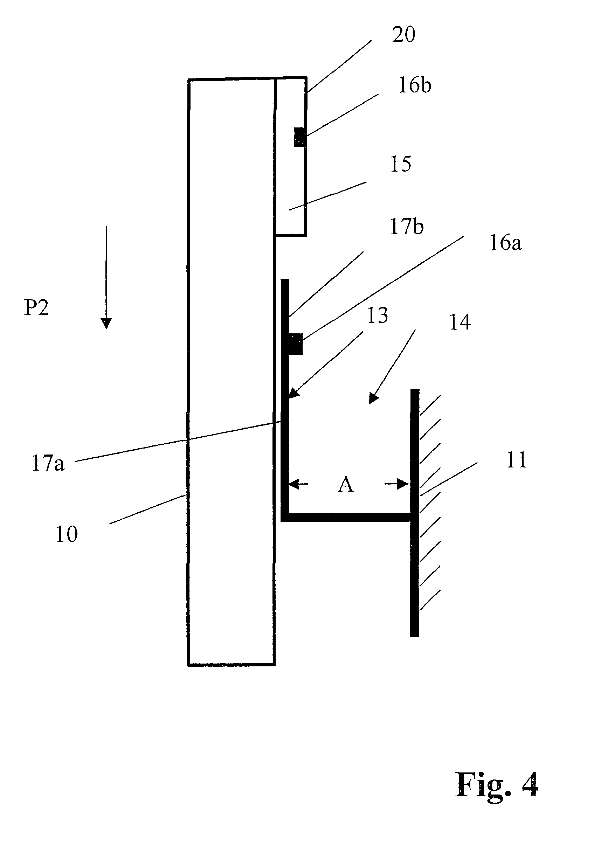

Die Ausführungsform, die in Fig. 4 gezeigt ist, unterscheidet sich von derjenigen gemäß Fig. 3 dadurch, daß die Kontakte 16a an der Zunge 13 nicht an der dem Telefon 10 zugewandten Längsseite 17a, sondern an der dem Telefon 10 abgewandten Längsseite 17b angeordnet sind. Diese Anordnung der Kontakte 16a in Fig. 4 hat zur Folge, daß die Kontakte 16b am Telefon 10 nicht wie in Fig. 3 auf der Hautleiterplatte 18, sondern an der Schlitzwandung 20 ausgebildet werden müssen. Dadurch, daß sich aber die Kontakte 16a an der Längsseite 17b der Zunge 13 befinden, wird in sehr einfacher Weise ein Berührungsschutz realisiert, wenn -abweichend von der Darstellung gemäß Fig. 4- der Abstand A zwischen der Zunge 13 und der Gehäusewandung 11 weiter reduziert wird.

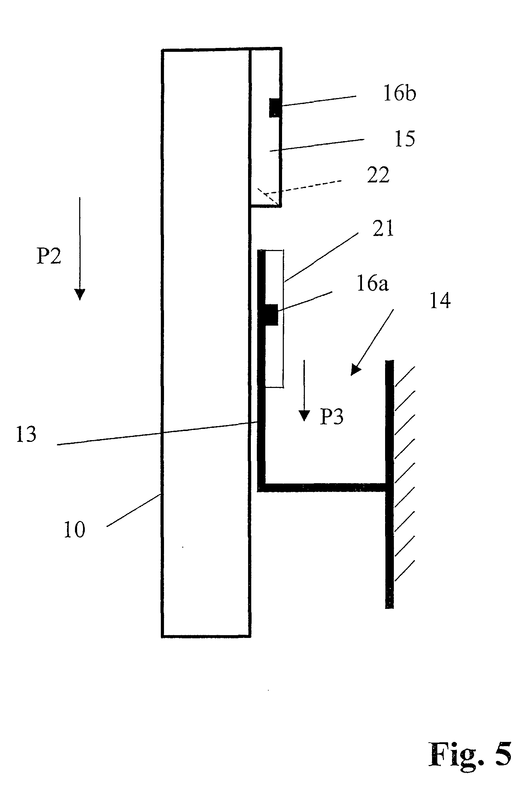

Zur Realisierung des Berührungsschutzes kann aber auf eine in Fig. 4 gezeigte Abstandsreduzierung verzichtet werden, wenn gemäß Fig. 5 die Kontakte 16a durch einen beweglichen Schieber 21 geschützt werden, der an der Zunge 13 in Pfeilrichtung P3 nach unten gleitet und die Kontakte 16a frei gibt, wenn das Telefon 10 bzw. der Schlitz 15 in Pfeilrichtung P2 auf die Zunge 13 geschoben wird. Soll auch der Schlitz 15 geschützt sein, kann dieser mit einer beweglichen Klappe 22 (in Fig. 5 gestrichelt versehen dargestellt) werden, die sich beim Einschieben der Zunge 13 in den Schlitz 15 öffnet.

Nur der Vollständigkeit halber sei darauf hingewiesen, daß die aus der Klappe 22 und/oder dem Schieber 21 gebildeten Schutzvorrichtungen nicht auf die Ausführungsform gemäß Fig. 5 beschränkt sind, sondern auch in fachmännischer Weiterbildung bei allen anderen gezeigten Ausführungsbeispielen dieser Anmeldung realisiert sein können.

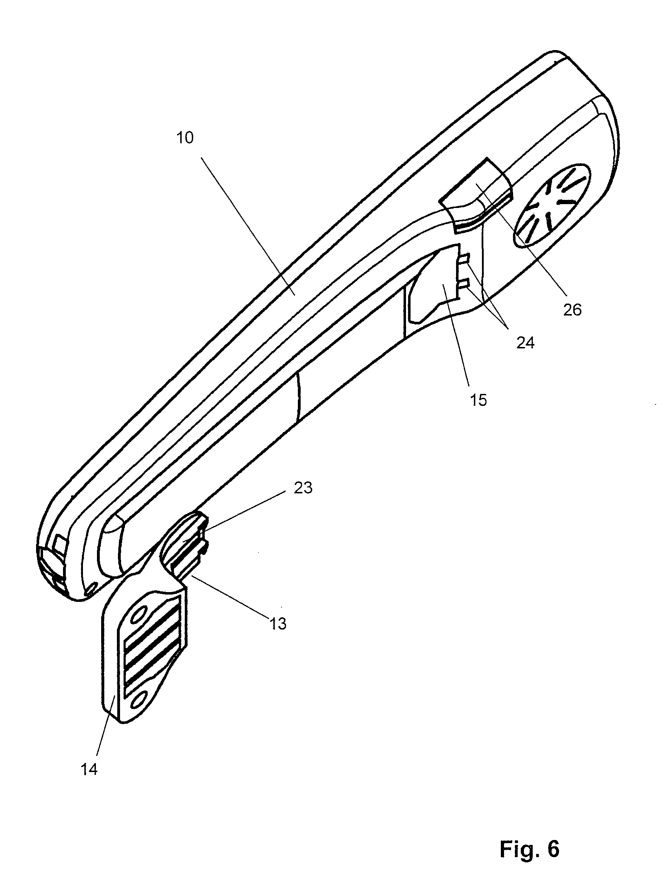

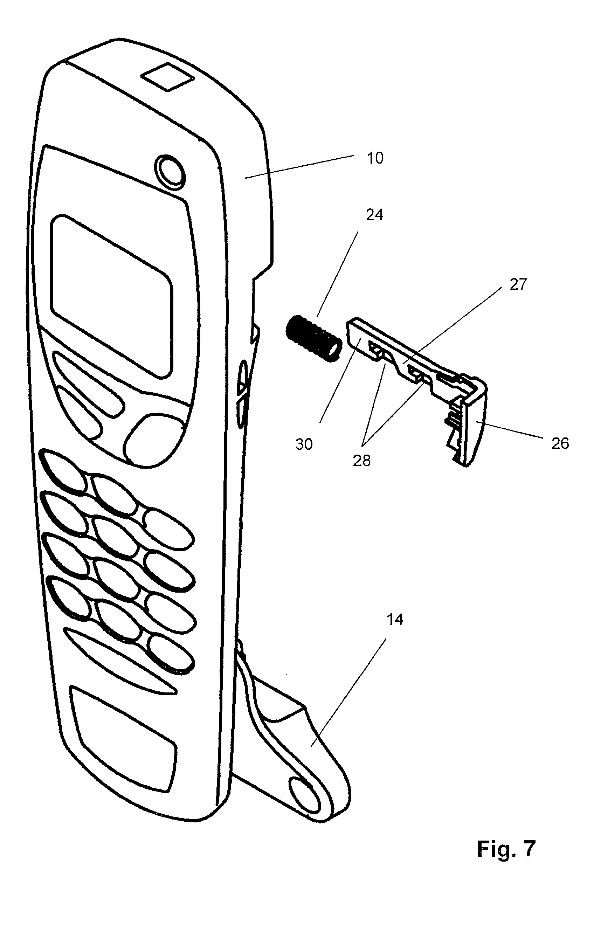

Die in Fig. 6 gezeigt Perspektive zeigt ein Telefon 10 und eine Halterung 14 der schon im Zusammenhang mit den Fig. 3 und 4 erläuterten Art. Um das Einfädeln der Zunge 13 in den Schlitz 15 zu erleichtern, sind an der Längsseite 17b der Zunge 13 Vorsprünge 23 ausgebildet, die komplementäre Führungen 24 am Schlitz 15 dann eingreifen, wenn die Zunge 13 in den Schlitz 15 eingesschoben wird. Außerdem ist in Fig. 6 ein als Entriegelungsmechanismus wirkender Druckknopfes 26 am Telefon 10 ausgebildet, auf den im Zusammenhang mit den Fig. 7 bis 9 nach näher eingegangen werden wird.

Dieser Druckknopf 26 ist -wie Fig. 7 zeigt- mit einem Gleitstück 27 verbunden und wird im Telefon 10 geführt (letzteres nicht gezeigt). Am Gleitstück 27 sind Rasthaken 28 ausgebildet, um eine feste Verbindung zwischen Telefon 10 und der Halterung 14 herzustellen, wenn die Zunge 13 in den Schlitz 15 eingeschoben ist. Außerdem wirkt auf das Gleitstück 27 eine Feder 29, welche, wenn der Druckknopf 26 in das Telefon 10 hineingedrückt wird, diesen und das mit ihm verbundene Gleitstück 27 immer wieder in die in Fig. 6 gezeigte Ausgangslage verbringt.

Nur der Vollständigkeit halber sei angemerkt, daß die Fläche 30 des Gleitstücks 27 auch mit Kontakten versehen sein kann, wenn eine elektrisch leitende Verbindung zwischen dem Telefon 10 und der Halterung 14 gewünscht ist (in Fig. 7 nicht besonders gezeigt).

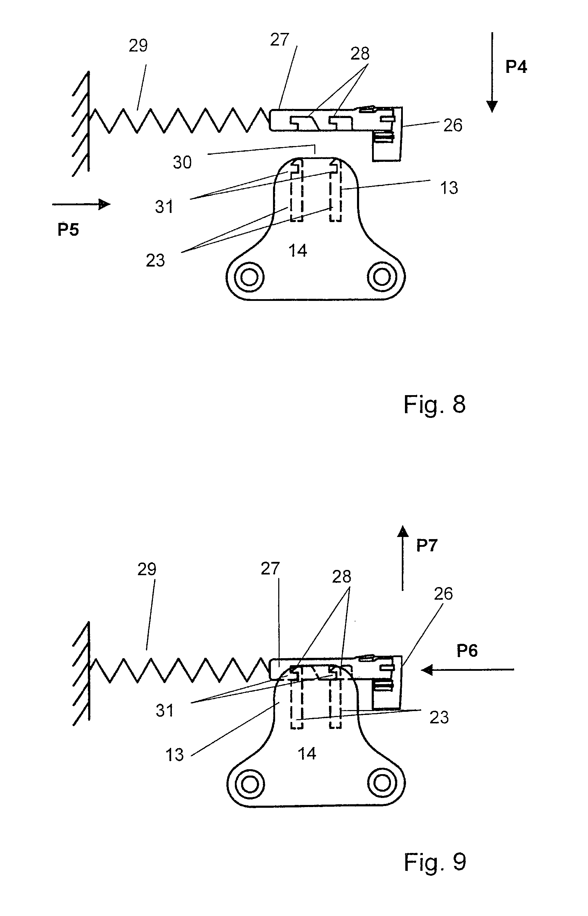

In Fig. 8 und 9 sind zur besseren Veranschaulichung der Verhältnisse bei der Befestigung zwischen Telefon und Halterung 14 lediglich die Halterung 14, der Druckknopf 26 mit dem Gleitstück 27 und die Feder 29 gezeigt. Außerdem machen die Darstellungen gemäß der Fig. 8 und 9 deutlich, daß die Längsseite 17b der Zunge 13, die mit Blickrichtung auf die Figuren dem Betrachter abgewandt ist, zwei Vorsprünge 23 ausgebildet sind. Jeder dieser Vorsprünge 23 ist am oberen, dem freien Ende 30 der Zunge 13 zugewandten Ende mit einen Haken 31 versehen.

In Fig. 8 ist durch den gegenseitigen Abstand zwischen der Halterung 14 und dem Gleitstück 27 angedeutet, daß die Zunge 13 noch nicht vollständig in den Schlitz 15 (in Fig. 8 nicht gezeigt) eingeschoben. Wird nun zur Verbindung des Telefons 10 mit der Halterung 14 das Gleitstück 27 in Pfeilrichtung P4 auf die Zunge 13 bewegt, kommen, unmittelbar bevor die Zunge 13 ihre Endlage im Schlitz 15 eingenommen hat, die Haken 31 mir den Rasthaken 28 am Gleitstück 27 in körperlichen Kontakt und bewegen das Gleitstück 27 in Pfeilrichtung P5. Hierdurch wird die Feder 29 etwas gespannt, so daß, wenn die Zunge 13 ihre Endlage im Schlitz 15 eingenommen hat, daß Gleitstück 27 durch die Feder 29 entgegen der Pfeilrichtung P5 wieder in seine Ausgangslage zurückgezogen wird, wobei gleichzeitig die Rasthaken 28 hinter den Haken 31 verrasten. Dieser gegenseitige Eingriff von Haken 31 und Rasthaken 28 ist in Fig. 9 näher veranschaulicht. Soll nun die in Fig. 9 gezeigte Verbindung zwischen Telefon und dem Halter 14 wieder aufgelöst werden, muß der Druckknopf 26 lediglich in Pfeilrichtung P6 gedrückt werden. Durch diese Bewegung geben die Rastenhaken 28 am Gleitstück 27 die Haken 31 an der Zunge 13 frei, so daß dann durch eine Bewegung in Pfeilrichtung P7 das Gleitstück 27 von der Zunge 13 getrennt werden kann, was gleichbedeutend mit der Abnahme des Telefons von der Halterung 14 ist. Da durch die Bewegung des Gleitstücks 27 in Richtung P6 die Feder 29 leicht zusammengedrückt wurde, wird, wenn keine Kraft mehr in Richtung P6 wirkt, der Druckknopf 26 und mit ihm das Gleitstück 27 wieder in seine Ausgangslage verbracht.

## Patentansprüche

1. Kombination bestehend
aus einem Telefon 10 mit einer Breite B1 und
einer Halterung 14, wobei die Halterung 14 das Telefon 10 zumindest zeitweise haltert,
dadurch gekennzeichnet,
daß eine Zunge 13 mit der einer Breite B2 und ein zur Zunge 13 komplementärer Schlitz 15 vorhanden ist, wobei die Breite B2 geringer ist als die Breite B1, und
daß zur ausschließlichen Befestigung des Telefons 10 in der Halterung die Zunge 13 in den Schlitz 14 eingreift.

2. Kombination nach Anspruch 1
dadurch gekennzeichnet,
daß an Zunge 13 und/oder Schlitz 15 eine Arretieranordnung 28, 31 vorgesehen ist, die einen Schutz gegen unbeabsichtigtes Trennen von Zunge 13 und Schlitz 15 bildet, wenn die Zunge 13 in den Schlitz 15 eingeschoben ist, und
daß ein Entriegelungsmechanismus 26, 27 vorhanden ist, der auf die Arretieranordnung 28, 31 wirkt und der im betätigten Zustand eine Trennung von Schlitz 15 und Zunge 13 erlaubt.

3. Kombination nach Anspruch 2
dadurch gekennzeichnet,
daß der Entriegelungsmechanismus 26, 27 Teil des Telefons 10 ist.

4. Kombination nach Anspruch 1, 2 oder 3
dadurch gekennzeichnet,
daß an der Zunge 13 und im Schlitz 15 jeweils elektrisch leitende Kontakte 16a, 16b vorgesehen sind, die im verbundenen Zustand von Zunge 13 und Schlitz 15 miteinander in körperlichem Kontakt stehen.

5. Kombination nach Anspruch 4
dadurch gekennzeichnet,
daß die Zunge 13 im wesentlichen zwei Längsseiten 17a, 17b und vier Schmalseiten aufweist und
daß die an der Zunge 13 ausgebildeten Kontakte 16a lediglich an einer der beiden Längsseiten 17a oder 17b angeordnet sind.

6. Kombination nach Anspruch 4 oder Anspruch 5
dadurch gekennzeichnet,
daß die Kontakte 16a, 16b an der Zunge 13 und/oder im Schlitz 15 mit einem beweglichen Schutz 21, 22 versehen sind, der die jeweils geschützten Kontakte 16a, 16b erst beim Einführen der Zunge 13 in den Schlitz 15 freigibt.

7. Kombination nach einem der Ansprüche 1 bis 6
dadurch gekennzeichnet,
daß die Zunge 13 an der Halterung 14 und der Schlitz 15 am Telefon 10 ausgebildet ist.

8. Kombination nach Anspruch 6
dadurch gekennzeichnet,
daß innerhalb des Telefons 10 eine Hauptleiterplatte 18 vorgesehen ist und
daß die jeweiligen elektrisch leitenden Kontakte 16b des Telefons 10 direkt auf der Hauptleiterplatte 18 ausgebildet sind.
